# EUROPEAN PATENT APPLICATION

(11) **EP 2 129 110 A2**
(43) Date of publication of application: **02.12.2009**
(21) Application number: 09251193.0
(22) Date of filing: 28.04.2009
(51) Int. Cl.: H04N 5/45

(54) **Information processing device, display method and program**

(30) Priority: 30.05.2008 JP 2008143250
(71) Applicant: Sony Corporation, Tokyo (JP)
(72) Inventor: Fujio, Nobori, Tokyo (JP); Nariaki, Sato, Tokyo (JP); Mamoru, Tokashiki, Tokyo (JP); Michinari, Kohno, Tokyo (JP)
(74) Representative: DeVile, Jonathan Mark

(57) **Abstract**

An information processing device includes a first content reproduction unit to acquire and to reproduce first content data, a second content reproduction unit to acquire and to reproduce second content data, a display control unit to generate a multiple image for displaying a first image reproduced by the first content reproduction unit and a second image reproduced by the second content reproduction unit on one screen, a display unit to display the multiple image generated by the display control unit, and an operation processing unit to cause the display control unit to change at least one of a position, a size and a transparency of the first image or the second image according to operation information input by a user.

## Description

### FIELD OF THE INVENTION

The present invention relates to an information processing device, a display method and a program.

### DESCRIPTION OF THE RELATED ART

A technique called "Picture-in-Picture" (which is referred to hereinafter as "PinP" for short) that multiplexes a principal window (hereinafter as the "main window") and a supplementary window (hereinafter as the "sub-window") on one screen to simultaneously display a plurality of contents when displaying contents such as television programs or videos played back from media such as DVD is in practical use today.

The PinP function is used not only to multiplex video contents such as television programs but also to multiplex a video content and a digital image output from a personal computer (PC) or the like. For example, Japanese Unexamined Patent Publication No. 2006-333101 discloses a television information display system that is capable of simultaneously display pictures provided by television broadcast and digital information for personal use.

### SUMMARY OF THE INVENTION

Various respective aspects and features of the invention are defined in the appended claims. Combinations of features from the dependent claims may be combined with features of the independent claims as appropriate and not merely as explicitly set out in the claims.

The existing PinP function has been used only in limited applications, such as when a user checks another interesting television program using the sub-window in addition to a video being watched in the main window or when a user watches a television program while working with a PC. Further, the display position of the sub-window is generally not flexible, allowed to make a selection from the limited options such as four corners of a screen, for example.

In light of the foregoing, it is desirable to provide a novel and improved information processing device, display method and program that provide a new application of the PinP function and enhance the flexibility of window operations.

According to an embodiment of the present invention, there is provided an information processing device including a first content reproduction unit to acquire and reproduce first content data, a second content reproduction unit to acquire and reproduce second content data, a display control unit to generate a multiple image for displaying a first image reproduced by the first content reproduction unit and a second image reproduced by the second content reproduction unit on one screen, a display unit to display the multiple image generated by the display control unit, and an operation processing unit to cause the display control unit to change at least one of a position, a size and a transparency of the first image or the second image according to operation information input by a user.

In this configuration, the first content data acquired by the first content reproduction unit is reproduced as the first image, and the second content data acquired by the second content reproduction unit is reproduced as the second image. Then, the multiple image is generated by the display control unit so as to display the reproduced first image and the reproduced second image on one screen and displayed by the display unit. After that, if operation information is input by a user, the operation processing unit causes the display control unit to change at least one of the position, the size and the transparency of the first image or the second image according to the input operation information.

The display control unit may make the second image transparent so as to allow the first image overlapping the second image to be visible when changing the position or the size of the second image.

The information processing device may further include a communication unit to receive content recommendation information, and a content selection unit to select one of the first content data acquired by the first content reproduction unit and the second content data acquired by the second content reproduction unit based on the content recommendation information received by the communication unit.

The content recommendation information may be information related to a content recommended by a user using another information processing device.

The content recommendation information may be information related to a content recommended by a content provider server holding a plurality of content data.

The information processing device may further include a connection status acquisition unit to acquire a list of users currently using other information processing devices.

The content selection unit may select content data of a content currently watched by a user specified from the list of users acquired by the connection status acquisition unit as the second content data.

According to another embodiment of the present invention, there is provided a display method comprising the steps of acquiring first content data and reproducing a first image, acquiring second content data and reproducing a second image, generating a multiple image for displaying the reproduced first image and the reproduced second image on one screen, displaying the generated multiple image, accepting operation information input by a user, and changing at least one of a position, a size and a transparency of the first image or the second image according to the input operation information.

According to another embodiment of the present invention, there is provided a program causing a computer controlling an information processing device to function as a first content reproduction unit to acquire and reproduce first content data, a second content reproduction unit to acquire and reproduce second content data, a display control unit to generate a multiple image for displaying a first image reproduced by the first content reproduction unit and a second image reproduced by the second content reproduction unit on one screen, a display unit to display the multiple image generated by the display control unit, and an operation processing unit to cause the display control unit to change at least one of a position, a size and a transparency of the first image or the second image according to operation information input by a user.

According to the embodiments of the present invention described above, it is possible to provide an information processing device, a display method and a program that provide a new application of the PinP function and enhance the flexibility of window operations.

### BRIEF DESCRIPTION OF THE DRAWINGS

Embodiments of the invention will now be described with reference to the accompanying drawings, throughout which like parts are referred to by like references, and in which:
FIG. 1 is an explanatory view showing an information processing system according to a first embodiment.
FIG. 2 is a block diagram showing an example of a logical functional layout of a content provider server according to the first embodiment.
FIG. 3 is an explanatory view showing an example of a window of an information processing device according to the first embodiment.
FIG. 4 is a block diagram showing an example of the hardware configuration of the information processing device according to the first embodiment.
FIG. 5 is a block diagram showing an example of a logical functional layout of the information processing device according to the first embodiment.
FIG. 6 is a flowchart showing an example of the flow of change processing of display attribute value.
FIG. 7 is an explanatory view showing the relation between user operations and the change processing of display attribute value.
FIG. 8 is an explanatory view showing an information processing system according to a second embodiment.
FIG. 9 is a block diagram showing an example of a logical functional layout of a content provider server according to the second embodiment.
FIG. 10 is a block diagram showing an example of a logical functional layout of an information processing device according to the second embodiment.
FIG. 11 is an explanatory view showing an example of a window of the information processing device according to the second embodiment.
FIG. 12 is an explanatory view conceptually showing the type of contents that can be selected by a content selection unit.
FIG. 13 shows an example of a window displayed on another information processing device according to the second embodiment.
FIG. 14 shows an example of a window displayed on the information processing device according to the second embodiment.
FIG. 15 shows another example of a window displayed on the information processing device according to the second embodiment.
FIG. 16 is a flowchart showing an example of the flow of content recommendation processing from another user.
FIG. 17 is a flowchart showing an example of the flow of content recommendation processing from a content provider server.
FIG. 18 is a flowchart showing an example of the flow of processing to request watching of the content being watched by another user.

### DETAILED DESCRIPTION OF THE PREFERRED EMBODIMENTS

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

### [First embodiment]

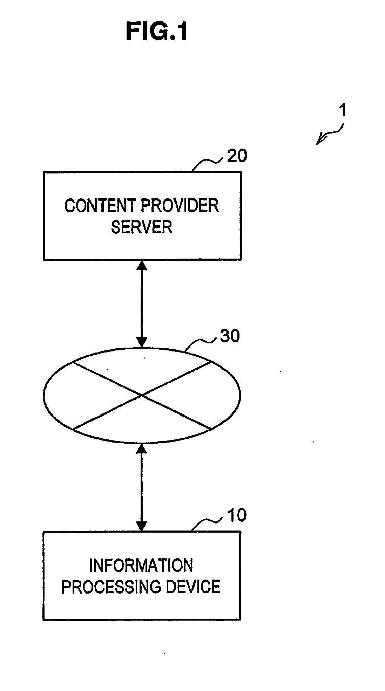

A first embodiment of the present invention is described hereinafter with reference to FIGS. 1 to 7. FIG. 1 is an explanatory view showing an information processing system 1 according to the first embodiment.

Referring to FIG. 1, the information processing system 1 includes an information processing device 10, a content provider server 20 and a communication network 30. The information processing device 10 and the content provider server 20 are connected to each other via the communication network 30.

In response to a request related to watching a content which is input by a user, the information processing device 10 acquires content data that is managed by the content provider server 20 from the content provider server 20. Then, the information processing device 10 reproduces the acquired content data and displays the content on a screen of a display device included in or connected to the information processing device 10.

The information processing device 10 may be a general-purpose computer such as a PC or a work station, a digital home device such as a television set or a DVD player, a game terminal, or a portable device such as a mobile phone terminal.

The content provider server 20 manages various contents such as videos like television programs, music or images, and transmits specified content data in response to a request from the information processing device 10. The content provider server 20 may be a digital media server (DMS) conforming to the DLNA guideline, for example.

The communication network 30 may be a public network such as the Internet, a telephone line network, a satellite communications network or a broadcast channel, a leased line network such as a wide area network (WAN), a local area network (LAN) or an Internet protocol-virtual private network (IP-VPN), or the like. The communication network 30 may be a wired or wireless network.

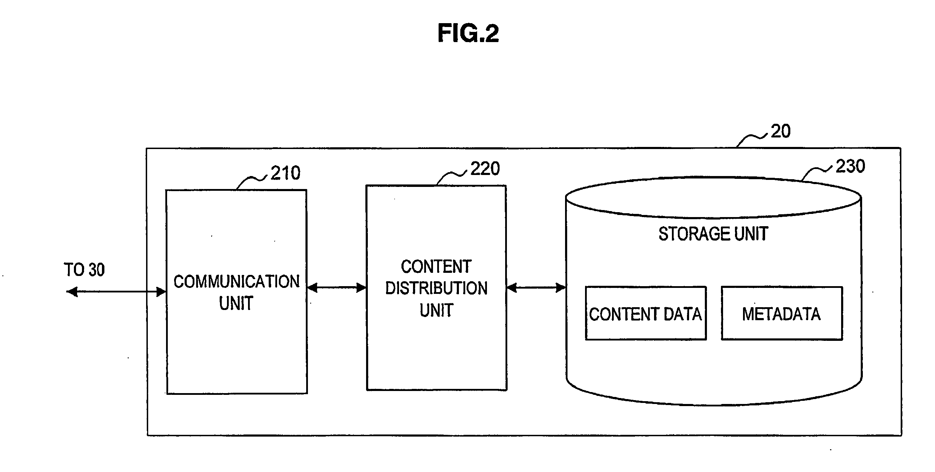

FIG. 2 is a block diagram showing an example of a logical functional layout of the content provider server 20.

Referring to FIG. 2, the content provider server 20 includes a communication unit 210, a content distribution unit 220, and a storage unit 230.

The communication unit 210 mediates the communication between the information processing device 10 and the content provider server 20 that are connected via the communication network 30. For example, when distribution of content data is requested from the information processing device 10 to the content provider server 20, the communication unit 210 of the content provider server 20 receives a request signal and outputs the received request signal to the content distribution unit 220, which is described later. Further, when the content distribution unit 220 distributes the requested content data in response to the request signal, the content data output from the content distribution unit 220 is sent out to the communication network 30 through the communication unit 210.

The content distribution unit 220 accepts a content data distribution request from the information processing device 10 through the communication unit 210, acquires the requested content data from the storage unit 230 and distributes it. Further, the content distribution unit 220 may acquire metadata indicating the location or the feature of the content, a thumbnail of the content or the like from the storage unit 230 according to the request and transmits the acquired data to the information processing device 10.

The storage unit 230 stores content data such as video data or image data, metadata of contents which is attribute information indicating the feature of the content data and so on. The metadata of contents may contain the title of the content, the gender or the age bracket of target users or the like, for example. The content data or the metadata of contents are read by the content distribution unit 220 and distributed to the information processing device 10.

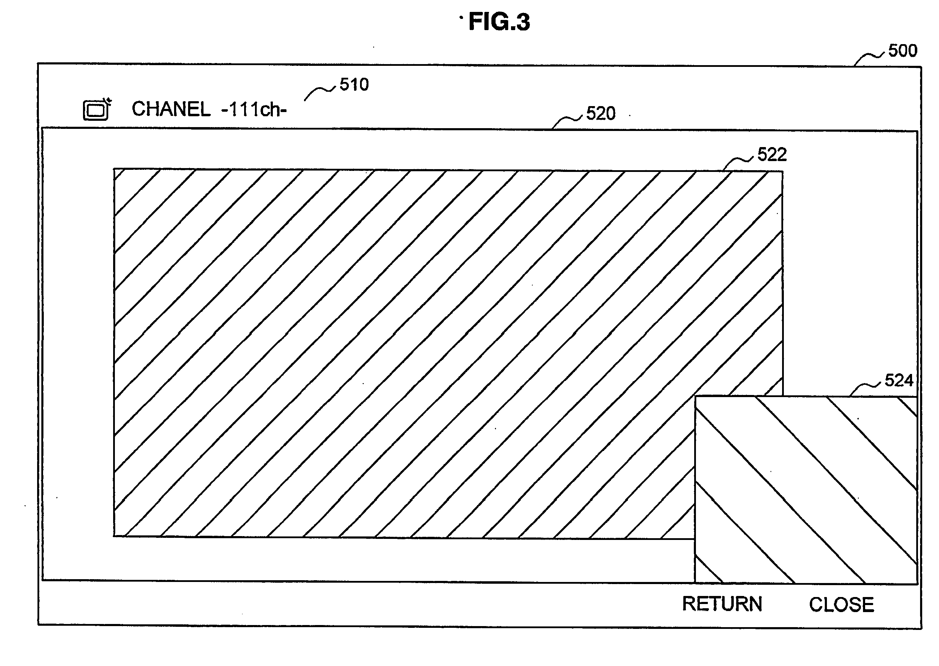

FIG. 3 is an explanatory view showing an example of a window displayed on a display device included in the information processing device 10 according to the embodiment.

Referring to Fig. 3, a window 500 which is displayed on a display device included in or connected to the information processing device 10 mainly includes an information display area 510 and a video display area 520. The video display area 520 includes a main window 522 and a sub-window 524.

In the information display area 510, arbitrary information can be displayed, such as information related to the content currently reproduced in the video display area 520 (the title of the content etc.) or information about a user currently using the information processing device 10.

In the video display area 520, video contents, image contents and so on acquired from the content provider server 20 and reproduced by the information processing device 10 are displayed. In the main window 522 and the sub-window 524 in the video display area 520, different contents may be displayed according to content reproduction processing, which is described in detail later.

In this embodiment, it is not necessary for the main window 522 and the sub-window 524 to be displayed all the time. Each of the main window 522 and the sub-window 524 is generated as necessary according to a request from a user. Further, although one sub-window 524 is illustrated in FIG. 3, two or more sub-windows 524 may be displayed in the video display area 520.

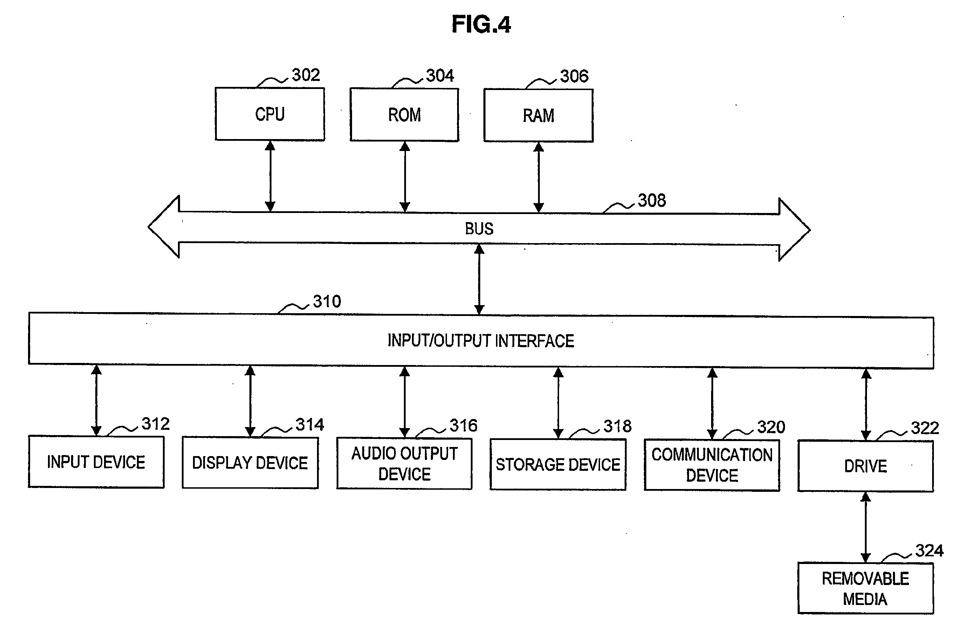

FIG. 4 is a block diagram showing an example of the hardware configuration of the information processing device 10.

Referring to FIG. 4, the information processing device 10 mainly includes a central processing unit (CPU) 302, a read only memory (ROM) 304, a random access memory (RAM) 306, a bus 308, an input/output interface 310, an input device 312, a display device 314, an audio output device 316, a storage device 318, a communication device 320 and a drive 322.

In FIG. 4, the CPU 302 controls the overall operation of the information processing device 10. The ROM 304 stores programs containing descriptions of processing to be executed in the information processing device 10, data and so on. The RAM 306 temporarily stores programs to be used for processing by the CPU 302, data and so on during execution.

The CPU 302, the ROM 304 and the RAM 306 are connected to one another through the bus 308. The bus 308 is further connected to the input/output interface 310.

The input/output interface 310 is an interface for connecting the CPU 302, the ROM 304 and the RAM 306 with the input device 312, the display device 314, the audio output device 316, the storage device 318, the communication device 320 and the drive 322.

The input device 312 is configured by buttons, a joystick, a switch, a lever, a mouse, a keyboard or the like, for example. The input device 312 receives an operation from a user of the information processing device 10 and outputs operation information to the CPU 302.

The display device 314 is configured by a cathode ray tube (CRT), a liquid crystal display (LCD), an organic light emitting diode (OLED) or the like, for example. The display device 314 displays the window as shown in FIG. 3, for example, according to the content reproduction processing, which is described in detail later.

The audio output device 316 is configured by a speaker or the like. The audio output device 316 outputs sounds, music or the like contained in the content reproduced by the information processing device 10 as auditory information to a user.

The storage device 318 is configured by a hard disk drive, a flash memory or the like, for example. In the storage device 318, program, program data and content data related to the embodiment are recorded, for example.

The communication device 320 mediates the communication with the content provider server 20 or another external device via the communication network 30 shown in FIG. 1 according to a given communication protocol.

The drive 322 is installed in the information processing device 10 according to need. A removable medium 324, for example, is attached to the drive 322.

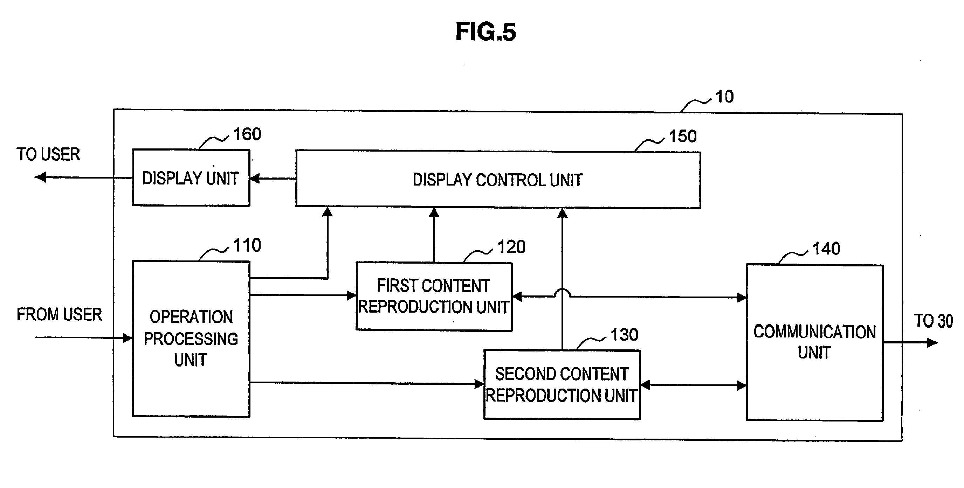

FIG. 5 is a block diagram showing an example of a logical functional layout of the information processing device 10. Referring to FIG. 5, the information processing device 10 mainly includes an operation processing unit 110, a first content reproduction unit 120, a second content reproduction unit 130, a communication unit 140, a display control unit 150 and a display unit 160.

The operation processing unit 110 interprets the operation information output from the above-described input device 312 which has been provided a user's operation, identifies the detail of the operation, and then supplies an instruction according to the operation to the first content reproduction unit 120, the second content reproduction unit 130 or the display control unit 150, which are described later. The operation information output from the input device 312 contains the kind of a pressed button or a keyboard key, the tilting direction or the tilting amount of a joystick, or the coordinate of a pointer during operation and so on, for example.

The instruction supplied from the operation processing unit 110 to the first content reproduction unit 120 or the second content reproduction unit 130 contains start reproduction, pause reproduction, end reproduction or the like of the content specified by a user, for example. Further, the instruction supplied from the operation processing unit 110 to the display control unit 150 contains a change in attribute information such as a position, a size or a transparency of the main window 522 or the sub-window 524 to be displayed on the display unit 160, for example.

In response to the instruction from the operation processing unit 110, the first content reproduction unit 120 acquires data of the specified content from the content provider server 20, for example, through the communication unit 140 and reproduces the data. Specifically, the first content reproduction unit 120 acquires the content data through the communication unit 140, separates audio data and image data contained in the acquired content data, decodes the separated data and reproduces the decoded data. Then, the first content reproduction unit 120 supplies an image obtained by the reproduction (including an image as each picture when a video is reproduced) as a first image to the display control unit 150.

The second content reproduction unit 130, like the first content reproduction unit 120, acquires data of the specified content from the content provider server 20 through the communication unit 140 and reproduces the data in response to the instruction from the operation processing unit 110. The second content reproduction unit 130 then supplies an image obtained by the reproduction as a second image to the display control unit 150.

The first content reproduction unit 120 and the second content reproduction unit 130 may not operate all the time inside the information processing device 10. For example, if there is a request for reproduction of a content from a user when no content is reproduced in the information processing device 10, the first content reproduction unit 120 is activated by the operation processing unit 110. Further, if there is a request for reproduction of another content from user when the first content reproduction unit 120 is reproducing the content, the second content reproduction unit 130 is activated by the operation processing unit 110. Although not shown in FIG. 5, the information processing device 10 may further include an additional content reproduction unit having the same functions as the first content reproduction unit 120 and the second content reproduction unit 130.

The communication unit 140 mediates the communication of the information processing device 10 with the content provider server 20 via the communication network 30 using the communication device 320 shown in FIG. 4. For example, if the communication unit 140 receives a signal requesting acquisition of content data from the first content reproduction unit 120 or the second content reproduction unit 130, it generates a communication packet containing the request signal and transmits the signal to the content provider server 20. Then, the communication unit 140 acquires a response signal from the communication packet returned from the content provider server 20 and transfers it to the first content reproduction unit 120 or the second content reproduction unit 130.

The display control unit 150 performs some processing on the first image output form the first content reproduction unit 120 and the second image output from the second content reproduction unit 130 as necessary and makes those images displayed on the display unit 160.

For example, if the images are simultaneously output from the first content reproduction unit 120 and the second content reproduction unit 130, the display control unit 150 generates one multiple image by multiplexing the first image and the second image and makes the generated multiple image displayed on the display unit 160.

At this point, the display control unit 150 keeps values such as the position (e.g. the coordinates of the upper left corner), the size (e.g. the length of vertical and horizontal sides) or the transparency (e.g. the α-value) of each input image as display attribute values and places the first image and the second image within the multiple image according to the values. The respective display attribute value may be changed according to an instruction from the operation processing unit 110 which has received a request from a user. The processing of changing the display attribute values is described in detail later.

The first image or the second image may be displayed on either the main window 522 or the sub-window 524 included in the video display area 520 shown in FIG. 3. The following description is based on the assumption that the first image is displayed in the main window 522 and the second image is displayed in the sub-window 524 for convenience of description.

The display unit 160 displays the image output from the display control unit 150 finally for a user using the display device 314 shown in FIG. 4.

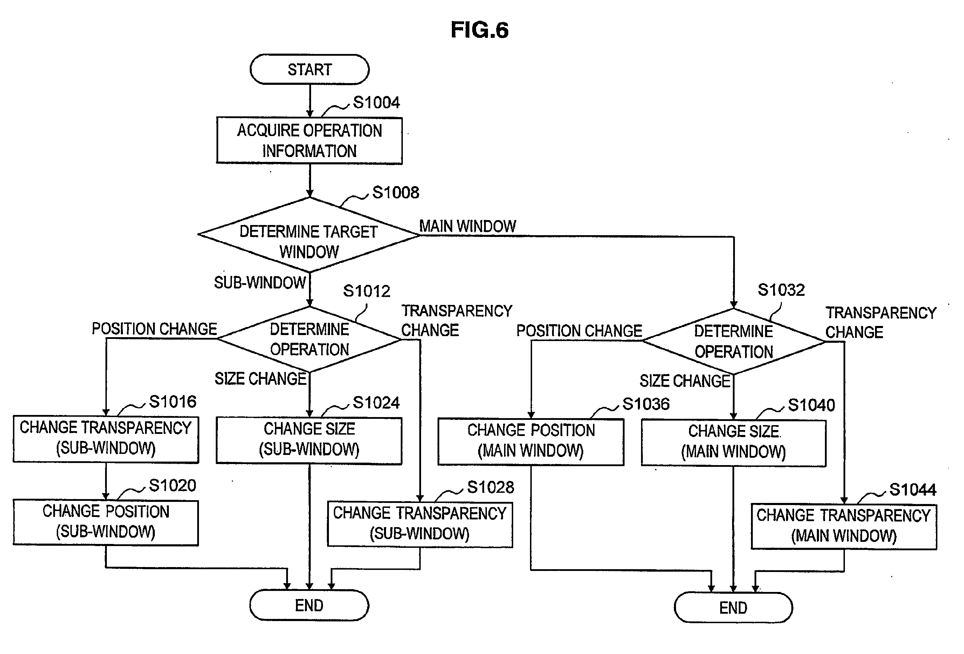

FIG. 6 is a flowchart showing the flow of change processing of display attribute value in this embodiment by way of illustration.

Referring to FIG. 6, the operation processing unit 110 acquires operation information firstly, triggered by operation of the input device 312 by a user (S1004). For example, if a user tilts the joystick included in the input device 312 with the intension to change the position of the image, an identification value indicating the tilting of the joystick, the tilting direction, the tilting amount and so on are acquired by the operation processing unit 110.

Next, the operation processing unit 110 determines which of the main window 522 and the sub-window 524 is the target of the operation by the user (S1008). The determination about the window may be made based on information such as the position of a pointer currently displayed on the window or the area activated on the window, for example. If the operation target window is the sub-window 524, the processing proceeds to the step S1012.

In S1012, the operation processing unit 110 determines which display attribute value of the second image displayed in the sub-window 524 is to be changed by the user's operation (S1012). In the example of FIG. 6, it is determined that the processing is either one of "position change", "size change" and "transparency change" based on the operation. According to a determination result about the processing, the operation processing unit 110 outputs an instruction signal to the display control unit 150, so that the subsequent processing shown in FIG. 6 is performed.

If the operation indicates "position change", the processing proceeds to the step S1016. When the user changes the position of the second image on the window, if the sub-window 524 is placed on top of the main window 522 as shown in FIG. 3, it is hampered to accurately locate the position. In light of this, receiving the instruction from the operation processing unit 110, the display control unit 150 makes the second image output form the second content reproduction unit 130 transparent in S1016, thereby allowing the first image placed at the back to be visible (S1016).

Further, the display control unit 150 moves the position of the second image according to the moving amount specified by the user, which is contained in the above-described operation information (S1020). As the moving amount specified by the user, arbitrary values such as the tilting direction or the tilting amount of the joystick, the duration that a particular button is pressed and the distance that the mouse is dragged may be used.

Further, if the operation indicates "size change" in S1012, the processing proceeds to the step S1024. In S1024, the display control unit 150 changes the size of the second image according to the changing amount specified by the user, which is contained in the above-described operation information (S1024). As the changing amount of the size specified by the user, arbitrary values such as the duration that the button was pressed, which is described by an example in S1020, may be used.

Furthermore, if the operation indicates "transparency change" in S1012, the processing proceeds to the step S1028. In S1028, the display control unit 150 increases or decreases the transparency of the second image according to the above-described operation information (S1028). For example, the display control unit 150 may increase the transparency of the second image if the first button included in the input device 312 is pressed by the user and decrease the transparency of the second image if the second button is pressed.

Returning to S1008, if the operation target window is the main window 522, the processing proceeds to the step S1032.

The processing from S1032 to S1044 is the same as the processing from S1012 to S1028 described above except that the image for which the display attribute values are to be changed is the first image, not the second image. However, if the operation indicates "position change" as a result of the determination in S1032, the first image may be moved without making the first image or the second image transparent as shown in FIG. 6 (S1036).

The flowchart of FIG. 6 shows the change processing of display attribute value which is performed in response to one-time operation read by the input device 312. In practice, however, the operation by a user is recognized as a plurality of successive operations by the operation processing unit 110 in some cases.

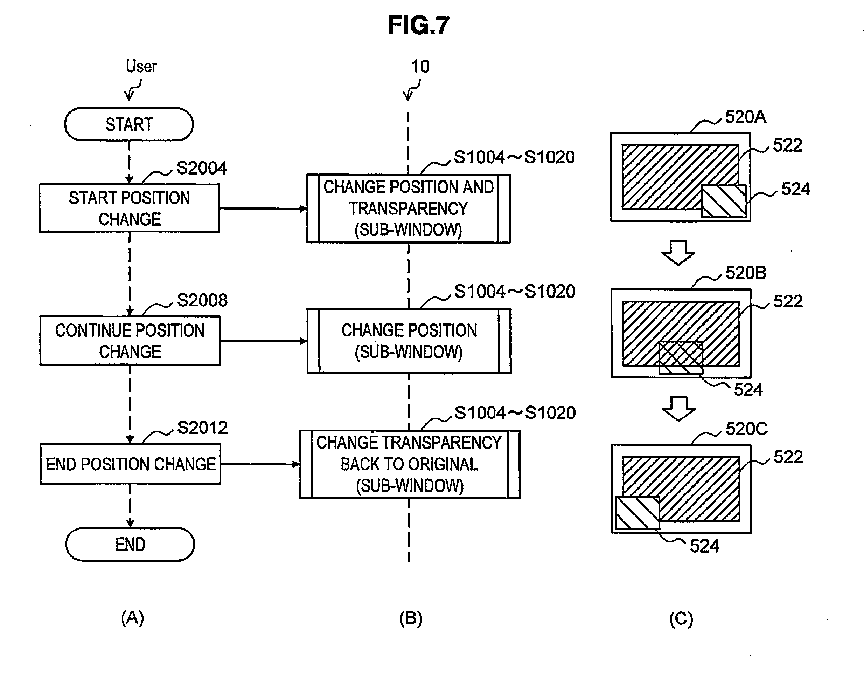

FIG. 7 is an explanatory view schematically showing a series of operations by a user from the start to the end of changing the position of the second image and the flow of processing in the information processing device 10 in response to the respective operations.

FIG. 7(A) shows a series of operations by a user. The change in the position of the second image by a user is started by the operation such as tilting of a joystick or pressing of a particular button, for example (S2004). After that, the operation by the user is continued until the second image reaches the position desired by the user (S2008) When the second image reaches the position desired by the user, the user ends the operation (S2012). For example, returning the joystick to its original position, releasing the pressed button or the like is recognized as the end of the operation.

FIG. 7(B) shows the change processing of display attribute value in the information processing device 10 which is executed after being triggered by the user's operation. FIG. 7(C) shows examples of the contents (520A to 520C) displayed in the video display area 520 as a result of the change processing of display attribute value.

If the user starts changing the position of the second image in S2004, the change processing of display attribute value shown in FIG. 6 is executed (S1004 to S1020). Consequently, the transparency of the second image displayed in the sub-window 524 is changed so as to allow the first image displayed in the main window 522 at the back to be visible, and then the position of the second image is changed (520A→520B).

After that, while the user continues the change in position in S2008, the change processing of display attribute value shown in FIG. 6 is executed in the same manner (S1004 to S1020). At this point, the position of the second image is changed. Because the transparency is already changed, it appears to the user that the second image moves in the transparent state (S520B).

Further, when the user ends the change in position in S2012, the change processing of display attribute value shown in FIG. 6 is executed again (S1004 to S1020). The transparency of the second image is thereby changed back to the value before the position change is started (520C).

The first embodiment of the present invention is described above with reference to FIGS. 1 to 7. In this embodiment, if the operation processing unit 110 receives a request for changing the position of the second image from a user, it causes the display control unit 150 to make the second image transparent so as to allow the first image overlapping the second image to be visible. The user can thereby freely change the position of the second image without suffering from a decrease in the visibility of the first image.

Although the case of changing the transparency of the second image so as to make the first image at the back visible at the time of changing the position of the second image is described above, it is feasible to make the second image transparent at the time of changing the size of the second image in the same manner. Further, it is also feasible to make the second image transparent at the time of changing the position or the size of the first image instead of the second image.

### [Second embodiment]

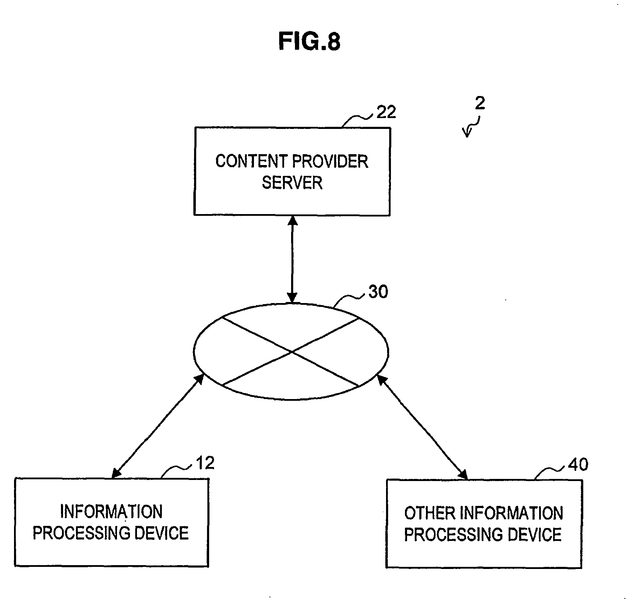

A second embodiment of the present invention is described hereinafter with reference to FIGS. 8 to 18. In the first embodiment of the present invention, a window interface with enhanced flexibility for operating the first image and the second image which are displayed in a multiplexed manner on one screen is provided. The second embodiment of the present invention provides a mechanism that enables more flexible sharing of contents between users with use of such a window interface.

FIG. 8 is an explanatory view showing an information processing system 2 according to the second embodiment.

Referring to FIG. 8, the information processing system 2 includes an information processing device 12, a content provider server 22, a communication network 30 and another information processing device 40. The information processing device 12, the content provider server 22 and the other information processing device 40 are connected to one another via the communication network 30.

Like the information processing device 10 according to the first embodiment, the information processing device 12 receives content data managed by the content provider server 22 from the content provider server 22 in response to a request from a user via an input device and reproduces the content data on a display device included in the information processing device 12. Further, in this embodiment, the information processing device 12 receives content recommendation information from the content provider server 22 or the other information processing device 40 connected via the communication network 30 and selects the content to be reproduced according to the received content recommendation information. Further, the information processing device 12 has a two-way communication function such as short messaging with the other information processing device 40, for example.

The content provider server 22 manages various contents and transmits the specified content data in response to a request from the information processing device 12, just like the content provider server 20 according to the first embodiment. Further, the content provider server 22 manages the connection status of users being connected to a content providing service provided by the server and supports the communication between the users, as described later.

The other information processing device 40 receives content data managed by the content provider server 22 from the content provider server 22 and reproduces the content data on the display device just like the information processing device 12, and further transmits and receives content recommendation information to and from the information processing device 12 via the communication network 30.

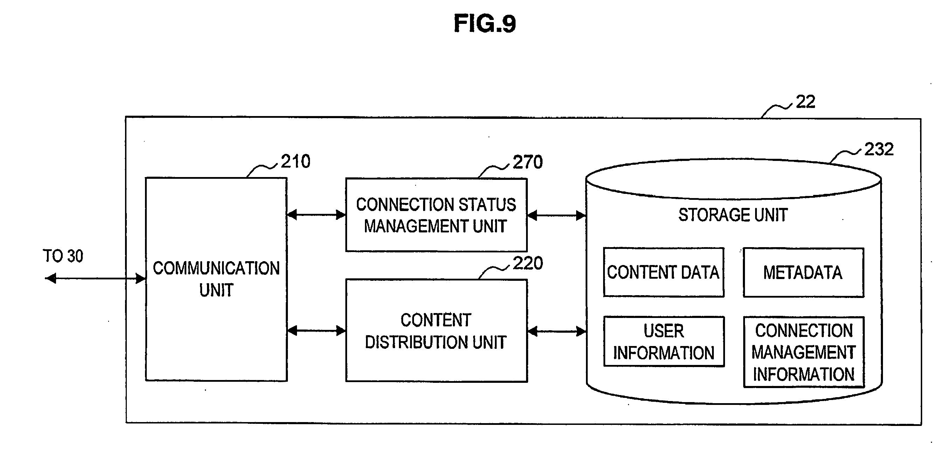

FIG. 9 is a block diagram showing an example of a logical functional layout of the content provider server 22 according to the second embodiment.

Referring to FIG. 9, the content provider server 22 mainly includes a communication unit 210, a content distribution unit 220, a storage unit 232 and a connection status management unit 270.

In this embodiment, the storage unit 232 stores content data, content metadata, user information such as identifiers or user names of the users using the content provider server 22, and connection management information used for communication between users. The connection management information may contain listed information of other users pre-registered as a party in two-way communication by a certain user, connection status information indicating whether respective users are currently on-line or off-line (i.e. whether respective users are connected to the service of the content provider server 22) and so on, for example.

The connection status management unit 270 manages the connection status of users for the content providing service using the above-described connection management information stored in the storage unit 232. For example, when a user of the information processing device 12 starts using the service of the content provider server 22, the connection status management unit 270 changes the connection status of the user from off-line (not connected) to off-line (connected). Further, the connection status management unit 270 transmits the connection status information of the other users who were pre-registered by the user of the information processing device 12 in response to a request transmitted from the information processing device 12, for example.

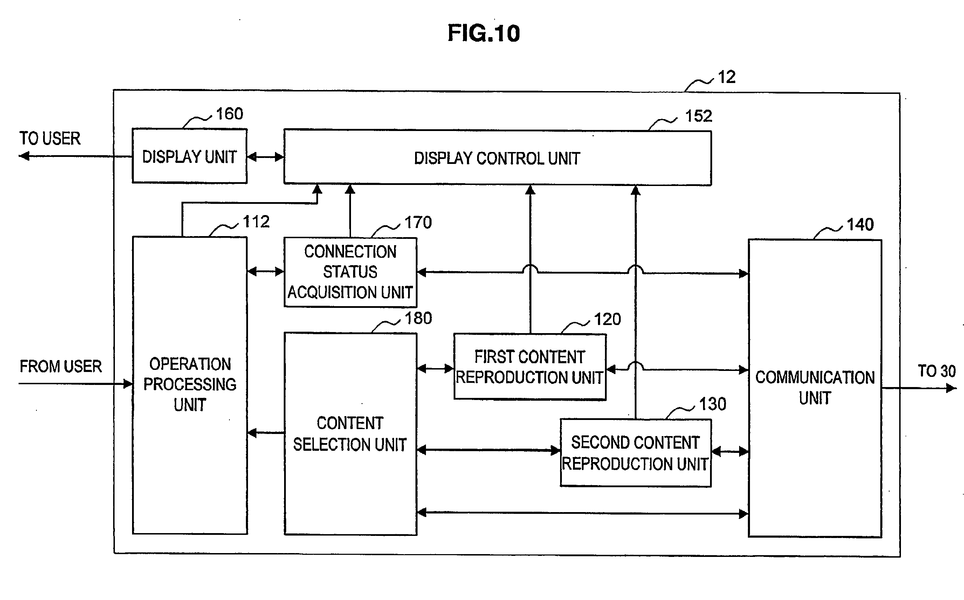

FIG. 10 is a block diagram showing an example of a logical functional layout of the information processing device 12 according to the second embodiment.

Referring to FIG. 10, the information processing device 12 includes an operation processing unit 112, a first content reproduction unit 120, a second content reproduction unit 130, a communication unit 140, a display control unit 152, a display unit 160, a connection status acquisition unit 170 and a content selection unit 180.

The operation processing unit 112 gives an instruction such as start reproduction or pause reproduction of the content to the first content reproduction unit 120 and the second content reproduction unit 130 according to operation information input by a user. In this embodiment, the content data acquired and reproduced by the first content reproduction unit 120 and the second content reproduction unit 130 is selected by the content selection unit 180, which is described later, based on content recommendation information which is received by the communication unit 140 from an external device. Further, the operation processing unit 112 instructs the display control unit 152 to change the display attribute values of the first image and the second image, just like the operation processing unit 110 according to the first embodiment.

The connection status acquisition unit 170 acquires the connection status information of the other users pre-registered by the user of the information processing device 12 from the content provider server 22 through the communication unit 140 and outputs a list of the connection status of the other users to the display control unit 152.

The display control unit 152 causes the display unit 160 to display the first image and the second image just like the display control unit 150 according to the first embodiment, and further causes the display unit 160 to display the list of the connection status of the other users output from the connection status acquisition unit 170.

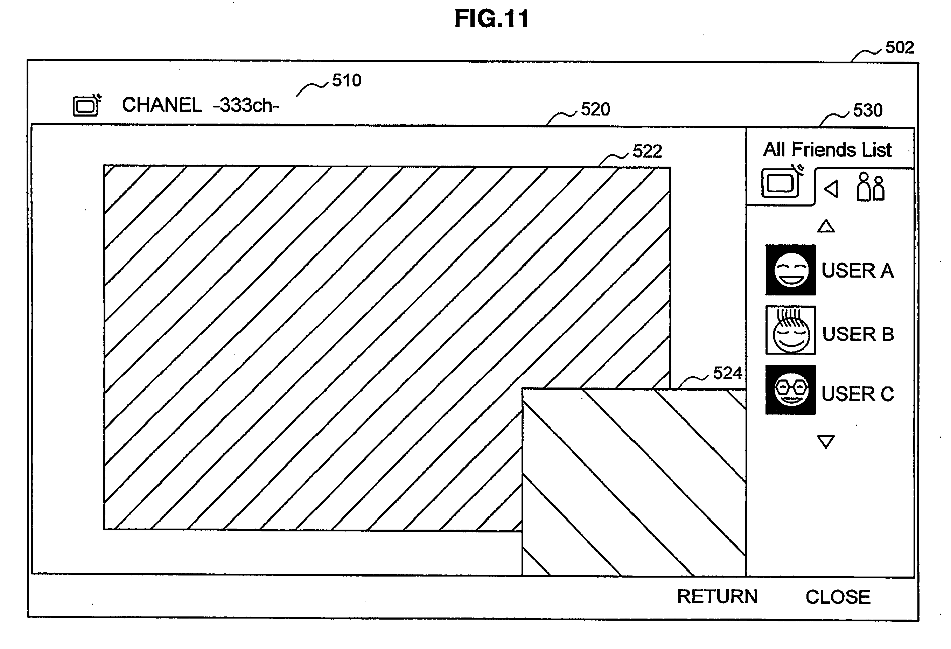

FIG. 11 is an explanatory view showing an example of a window displayed on a display device included in the information processing device 12 according to the embodiment.

Referring to FIG. 11, the window 502 which is displayed on a display device in the information processing device 12 mainly includes an information display area 510, a video display area 520 and a connection status display area 530. The video display area 520 includes a main window 522 and a sub-window 524.

In the connection status display area 530, icons representing three users pre-registered by the user of the information processing device 12 and user names of the respective users (user A, B, C) are displayed. Further, in the connection status display area 530, the connection statuses of the three listed users are indicated by altering each background color of the icons representing the users. In the example of FIG. 11, the users A and C, among the users A, B and C, represented by the icons with the inverted background color are currently connected to the service.

A method of displaying the users in the connection status display area 530 is not limited to the example shown in FIG. 11. For example, users' identification marks, avatars or the like may be displayed instead of the icons representing users and user names. Further, the connection status of users may be shown using specific texts or objects.

Referring back to FIG. 10, an example of the logical functional layout of the information processing device 12 is further described.

The content selection unit 180 transmits and receives content recommendation information to and from an external device through the communication unit 140. For example, the content recommendation information may be information related to the content recommended by the user of the other information processing device 40. Further, the content recommendation information may be information related to the content recommended by the content provider server 22. The content selection unit 180 selects the content to be reproduced by the first content reproduction unit 120 and the second content reproduction unit 130 based on the content recommendation information.

Alternatively, the content selection unit 180 may select the content which is currently watched by the user who is specified by the user of the information processing device 12 from the list of the other users acquired by the connection status acquisition unit 170 as the content to be reproduced.

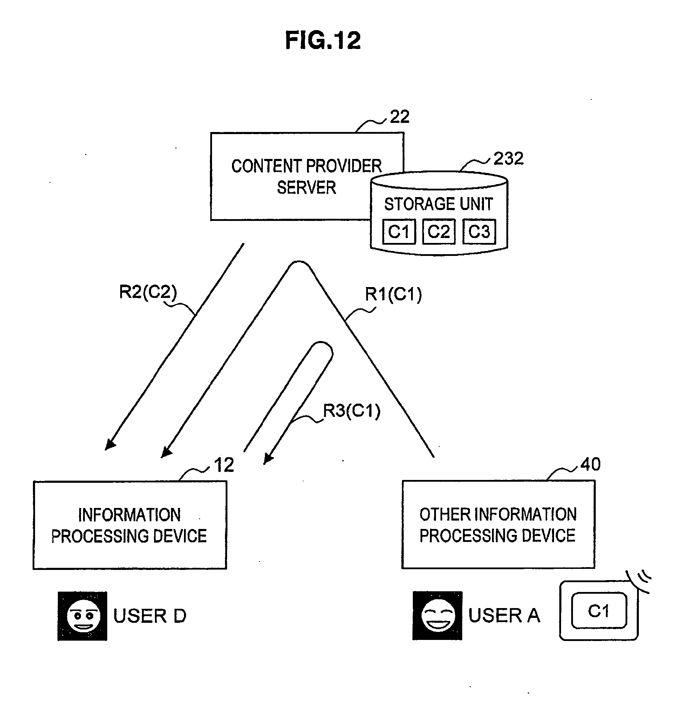

FIG. 12 is an explanatory view conceptually showing the type of contents that can be selected by the content selection unit 180.

Referring to FIG. 12, the information processing device 12, the content provider server 22 and the other information processing device 40 which are connected via the communication network 30 (not shown) are shown. Further, the icon representing the user D who is using the information processing device 12 is shown at the lower left of FIG. 12, and the icon representing the user A who is using the other information processing device 40 is shown at the lower right of FIG. 12. The user A is currently watching the content C1 using the other information processing device 40. The storage unit 232 of the content provider server 22 stores content data and metadata of contents C1, C2 and C3.

In FIG. 12, it is possible to transmit content recommendation information R1 that recommends the content C1, which is currently watched by the user A, from the other information processing device 40 to the information processing device 12, for example.

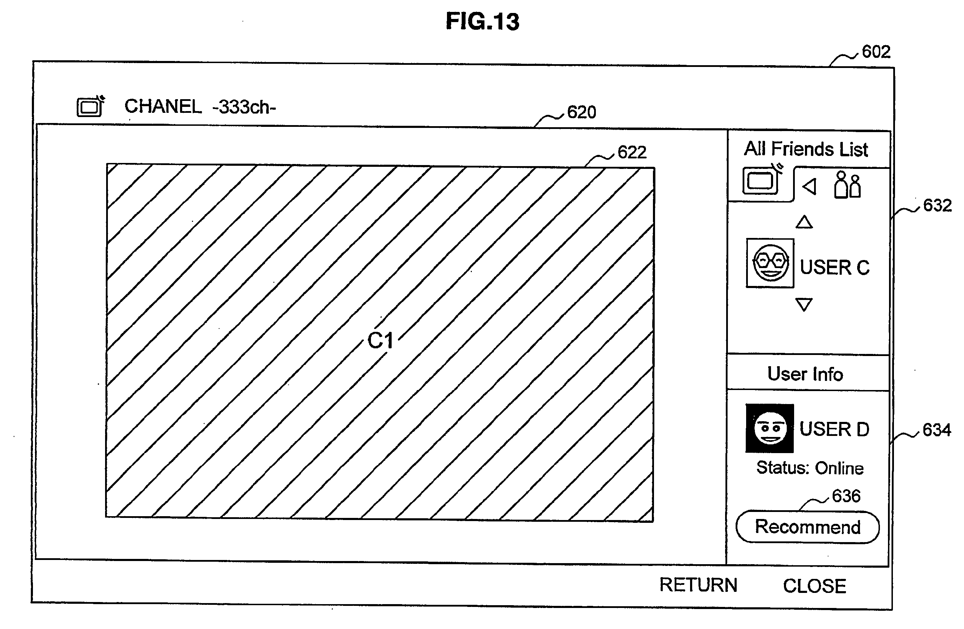

FIG. 13 shows a window 602 as an example of the window displayed on the other information processing device 40. In FIG. 13, the window 602 includes a video display area 620 in which a main window 622 is displayed, a connection status display area 632, and a user information display area 634. Further, the content C1 which is currently watched by the user A is displayed in the main window 622. Further, information about the user D of the information processing device 12 is displayed in the user information display area 634.

On the window 602, when the user A wants to recommend the currently watched content C1 to the user D, for example, the user A presses a Recommend button 636 in the user information display area 634, which is displayed by selecting the user A from the connection status display area 632. The content recommendation information R1 that recommends the content C1 is thereby transmitted from the other information processing device 40 to the information processing device 12.

In FIG. 12, it is also possible to transmit content recommendation information R2 that recommends the content C2, which is considered to match the preference of the user D by the content provider server 22, from the content provider server 22 to the information processing device 12, for example.

The content recommended by the content provider server 22 may be the content which is recommended by a given recommendation algorithm based on collaborative filtering, content filtering, neural network or the like, for example. For example, as the recommendation algorithm based on the collaborative filtering, the content which has been watched by another user who has the similar attribute, such as a gender or age bracket, to the user D or the like may be recommended. Further, as the recommendation algorithm based on the content filtering, another content belonging to the genre of the content currently watched by the user D or the like may be recommended, for example. Such a recommendation algorithm may be implemented in the content distribution unit 220 of the content provider server 22, for example.

The content selection unit 180 of the information processing device 12 receives the content recommendation information R1 or R2 and displays the title, thumbnail or the like of the content contained in the received information on the display unit 160 via the display control unit 152. At this point, the user D can select which of the main window 522 and the sub-window 524 the recommended content is to be used for watching the recommended content.

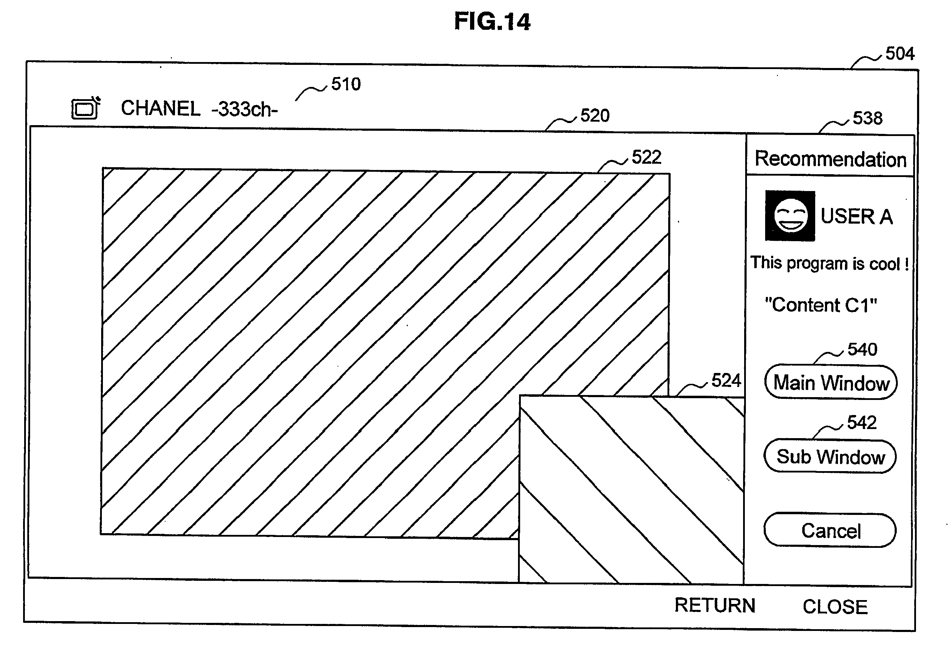

FIG. 14 shows a window 504 as an example of the window displayed on the information processing device 12 which has received the content recommendation information R1.

Referring to FIG. 14, a recommendation information display area 538 is shown at the right side of the window 504. In the recommendation information display area 538, a message indicating that the content C1 is recommended by the user A, a button 540 for selecting the main window 522 and a button 542 for selecting the sub-window 524 are displayed.

If the user D presses the button 540 on the window 504, the content selection unit 180 instructs the first content reproduction unit 120 to acquire the content data of the content C1. On the other hand, if the user D presses the button 542 on the window 504, the content selection unit 180 instructs the second content reproduction unit 130 to acquire the content data of the content C1.

In the recommendation information display area 538 of the window 504, not only the title of the recommended content but also arbitrary information may be displayed, such the thumbnail of the content, the cast of the content and the evaluation of the content by the user A.

Referring back to FIG. 12, the user D can request watching of the content C1,which is currently watched by the user A, to the information processing device 12, for example (R3).

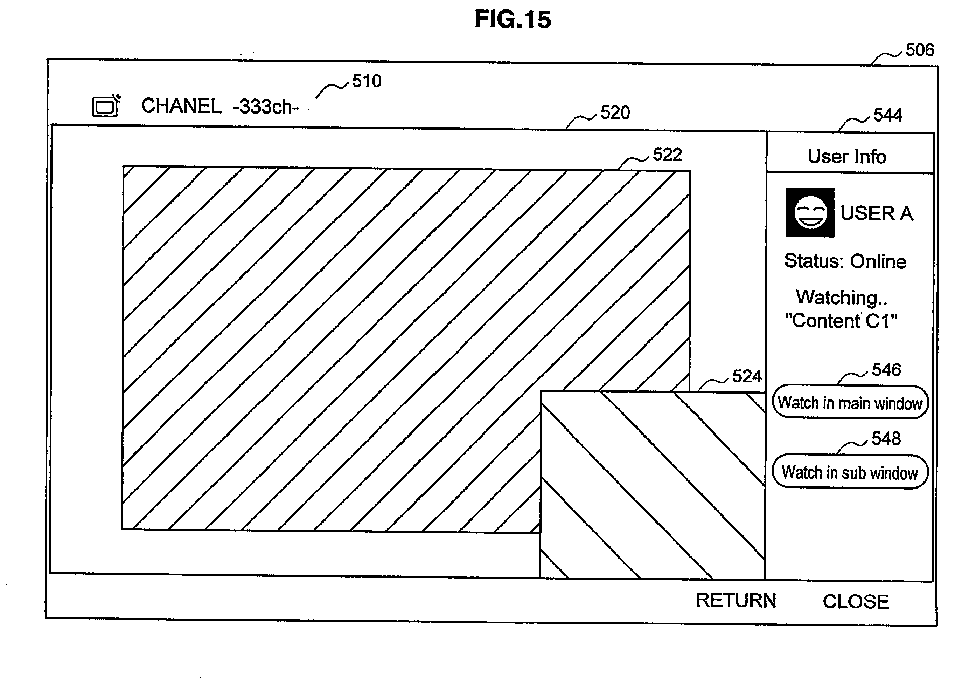

FIG. 15 shows a window 506 as an example of the window displayed on the information processing device 12. Referring to FIG. 15, a user information display area 544 is included at the right side of the window 506. In the user information display area 544, the connection status (on-line) of the user A, the title of the content C1 currently watched by the user A, and buttons 546 and 548 for requesting watching of the content C1 are displayed.

If the user D presses the button 546 on the window 506, the content selection unit 180 instructs the first content reproduction unit 120 to acquire the content data of the content C1. As a result, the content C1 is acquired from the content provider server 22 by the first content reproduction unit 120 and reproduced in the main window 522. On the other hand, if the user D presses the button 548 on the window 506, the content selection unit 180 instructs the second content reproduction unit 130 to acquire the content data of the content C1. As a result, the content C1 is acquired from the content provider server 22 by the second content reproduction unit 130 and reproduced in the sub-window 524.

Although the case of selecting the content which is currently watched by the other user displayed in the user information display area 544 is illustrated in FIG. 15, the display of the user information display area 544 may be omitted in this embodiment. For example, if a cursor is positioned on any user displayed in the connection status display area 530 shown in FIG. 11, the content selection unit 180 may immediately select the content being watched by the user and reproduce it in the sub-window 524. The user of the information processing device 12 can thereby efficiently browse various contents being watched by the other users easily as if changing channels with use of the sub-window 524.

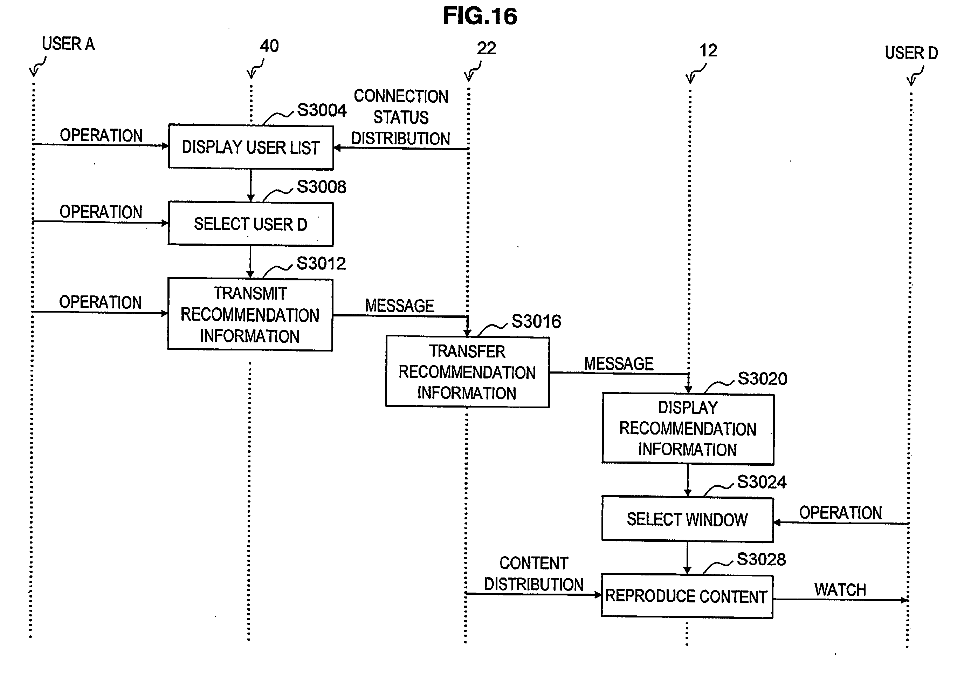

FIG. 16 is a flowchart showing an example of the flow of the processing when the content is recommended from the user A using the other information processing device 40 to the user D using the information processing device 12 (which corresponds to R1 in FIG. 12).

Referring to FIG. 16, the other information processing device 40, in response to a request from the user A, acquires the user list (and the connection status etc.) from the content provider server 22 and displays it (S3004). The user list is displayed in the connection status display area 632 of the other information processing device 40 shown in FIG. 13, for example.

Next, the user A selects the user D to whom the content is to be recommended from the displayed user list (S3008). Then, the user information display area 634 shown in FIG. 13, for example, is displayed.

Then, if the user A presses the Recommend button 636 in the user information display area 634, for example, the content recommendation information is transmitted from the other information processing device 40 to the content provider server 22 (S3012). The content recommendation information contains the identifier of the recommended content, the identifier of the user D as the destination of recommendation, a message from the user A to the user D and so on, for example.

Receiving the content recommendation information from the other information processing device 40, the content provider server 22 transfers the received content recommendation information to the information processing device 12 which is currently used by the user D and is the destination of the content recommendation information (S3016).

After that, the transferred content recommendation information is received by the communication unit 140 of the information processing device 12, and the information related to the recommended content is displayed for the user D (S3020). Specifically, the recommendation information display area 538 shown in FIG. 14 is displayed on the screen of the display device 314, for example.

Then, if the user D presses the button 542 specifying reproduction in the sub-window 524, for example, the content selection unit 180 instructs the second content reproduction unit 130 to acquire the recommended content data (S3024).

Finally, the second content reproduction unit 130, for example, acquires the recommended content data from the content provider server 22 and reproduces it, and the content is displayed in the sub-window 524 (S3028).

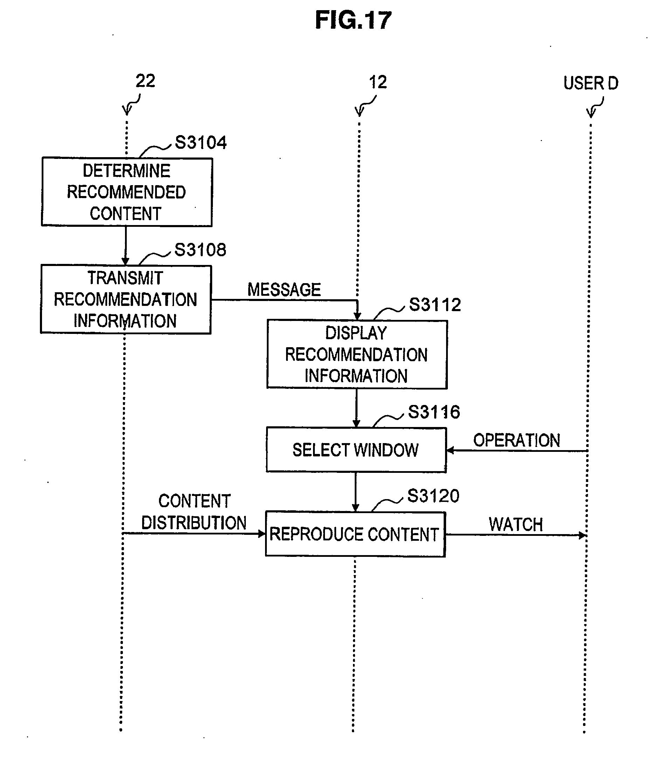

FIG. 17 is a flowchart showing an example of the flow of the processing when the content which is considered to match the preference of the user D by the content provider server 22 is recommended to the user D (which corresponds to R2 in FIG. 12).

Referring to FIG. 17, the content provider server 22 first determines the content which is considered to match the preference of the user D (S3104). Next, the content provider server 22 transmits the content recommendation information to the information processing device 12 currently used by the user D (S3108).

Next, the content recommendation information is received by the communication unit 140 of the information processing device 12, and the information related to the recommended content is displayed for the user D (S3112). Specifically, the recommendation information display area 538 shown in FIG. 14, for example, is displayed on the screen of the display device 314.

Then, if the user D presses the button 540 specifying reproduction in the main window 522, for example, the content selection unit 180 instructs the first content reproduction unit 120 to acquire the recommended content data (S3116).

Finally, the first content reproduction unit 120, for example, acquires the recommended content data from the content provider server 22 and reproduces it, and the content is displayed in the main window 522 (S3120).

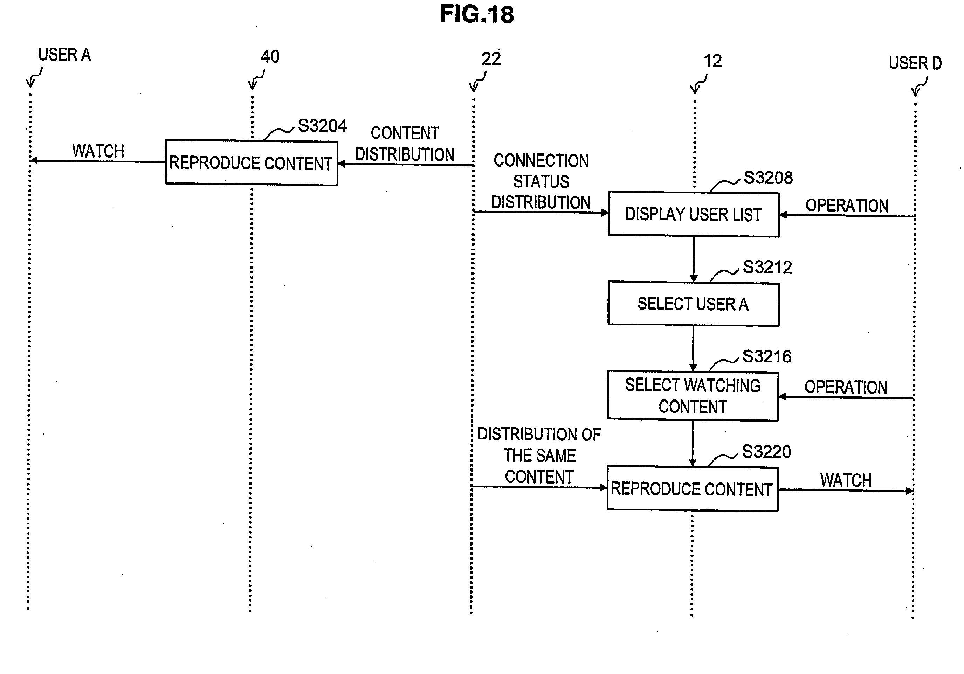

FIG. 18 is a flowchart showing an example of the flow of the processing when the user D requests watching of the content C1, which is currently watched by the user A, to the information processing device 12 (which corresponds to R3 in FIG. 12).

Referring to FIG. 18, the other information processing device 40 is reproducing the content distributed from the content provider server 22 firstly (S3204).

Next, the information processing device 12, in response to a request from the user D, acquires the user list from the content provider server 22 and displays it (S3208). The user list is displayed in the connection status display area 530 of the information processing device 12 shown in FIG. 11, for example.

Then, the user D selects the user A from the displayed user list (S3212). The user information display area 544 shown in FIG. 15, for example, is thereby displayed. In the user information display area 544, the title of the content currently watched by the user A or the like is displayed, for example.

If the user D presses the button 548 in the user information display area 634 and selects watching of the content, for example, the content selection unit 180 instructs the second content reproduction unit 130 to acquire the content data of the content (S3216).

Then, the second content reproduction unit 130, for example, acquires the content data of the content currently watched by the user A from the content provider server 22 and reproduces it, and the content is displayed in the sub-window 524 (S3220).

The second embodiment of the present invention is described above with reference to FIGS. 8 to 18. In this embodiment, the content selection unit 180 selects the content data to be acquired by the first content reproduction unit 120 or the second content reproduction unit 130 based on the content recommendation information received by the communication unit 140.

The content recommendation information received by the communication unit 140 may be information related to the content which is recommended by the user using the other information processing device 40, or information related to the content which is recommended by the content provider server 22.

Further, the content selection unit 180 may select the content data of the content which is currently watched by the user specified from the user list acquired by the connection status acquisition unit 170.

This enables the user of the information processing device 12 to flexibly share the content with the other users, thereby realizing more affluent communications between users.

The present application contains subject matter related to that disclosed in Japanese Priority Patent Application JP 2008-143250 filed in the Japan Patent Office on May 30, 2008, the entire content of which is hereby incorporated by reference.

Although a preferred embodiment of the present invention is described in the foregoing with reference to the drawings, the present invention is not limited thereto. It should be understood by those skilled in the art that various modifications, combinations, sub-combinations and alterations may occur depending on design requirements and other factors insofar as they are within the scope of the appended claims or the equivalents thereof.

For example, in the first or second embodiments, the content provider server 20, 22 is described as a separate device from the information processing device 10, 12 or the other information processing device 40. However, the information processing device 10, 12 or the other information processing device 40 may have the function of the content provider server 20, 22. Further, the information processing device 10, 12 or the other information processing device 40 may be connected to services of a plurality of different content provider servers.

## Claims

1. An information processing device comprising:
a first content reproduction unit to acquire and reproduce first content data;
a second content reproduction unit to acquire and reproduce second content data;
a display control unit to generate a multiple image for displaying a first image reproduced by the first content reproduction unit and a second image reproduced by the second content reproduction unit on one screen;
a display unit to display the multiple image generated by the display control unit; and
an operation processing unit to cause the display control unit to change at least one of a position, a size and a transparency of the first image or the second image according to operation information input by a user.

2. The information processing device according to claim 1, wherein
the display control unit makes the second image transparent so as to allow the first image overlapping the second image to be visible when changing the position or the size of the second image.

3. The information processing device according to claim 1, further comprising:
a communication unit to receive content recommendation information; and
a content selection unit to select one of the first content data acquired by the first content reproduction unit and the second content data acquired by the second content reproduction unit based on the content recommendation information received by the communication unit.

4. The information processing device according to claim 3, wherein
the content recommendation information is information related to a content recommended by a user using another information processing device.

5. The information processing device according to claim 3, wherein
the content recommendation information is information related to a content recommended by a content provider server holding a plurality of content data.

6. The information processing device according to claim 3, further comprising:
a connection status acquisition unit to acquire a list of users currently using other information processing devices.

7. The information processing device according to claim 6, wherein
the content selection unit selects content data of a content currently watched by a user specified from the list of users acquired by the connection status acquisition unit as the second content data.

8. A display method comprising the steps of:
acquiring first content data and reproducing a first image;
acquiring second content data and reproducing a second image;
generating a multiple image for displaying the reproduced first image and the reproduced second image on one screen;
displaying the generated multiple image;
accepting operation information input by a user; and
changing at least one of a position, a size and a transparency of the first image or the second image according to the input operation information.

9. A program causing a computer controlling an information processing device to function as:
a first content reproduction unit to acquire and reproduce first content data;
a second content reproduction unit to acquire and reproduce second content data;
a display control unit to generate a multiple image for displaying a first image reproduced by the first content reproduction unit and a second image reproduced by the second content reproduction unit on one screen;
a display unit to display the multiple image generated by the display control unit; and
an operation processing unit to cause the display control unit to change at least one of a position, a size and a transparency of the first image or the second image according to operation information input by a user.
